# EUROPÄISCHE PATENTANMELDUNG

(11) **EP 2 716 374 A2**
(43) Veröffentlichungstag der Anmeldung: **09.04.2014**
(21) Anmeldenummer: 13187027.1
(22) Anmeldetag: 02.10.2013
(51) Int. Cl.: B08B 3/02, B23Q 11/00

(54) **Vorrichtung zum Entgraten, Entspanen und Reinigen eines schlanken Bauteils, wie Bohrer, Fräser und dgl.**

(30) Priorität: 08.10.2012 DE 102012109533
(71) Anmelder: Piller Entgrattechnik GmbH, 71254 Ditzingen (DE)
(72) Erfinder: Thomas Piller, 71254 Ditzingen (DE)
(74) Vertreter: Fleck, Hermann-Josef

(57) **Zusammenfassung**

Die Erfindung betrifft eine Vorrichtung zum Entgraten, Entspanen und Reinigen eines schlanken Bauteils, wie Bohrer, Fräser und dgl., dass das Bauteil (10) von einem Antrieb (20) mit einer Umdrehung von > 5000 U/min in Drehbewegungen versetzt ist und dass dabei auf das Bauteil (10) mindestens ein Flüssigkeitsstrahl (30) mit einem Druck von > 400 bar gerichtet ist. Dabei wird eine gute Entgratung, Entspanung und Reinigung des Bauteils erreicht, ohne dass ein Brechen gerade von Bauteilen mit kleinem Durchmesser zu befürchten ist.

## Beschreibung

Die Erfindung betrifft eine Vorrichtung zum Entgraten, Entspanen und Reinigen eines schlanken Bauteils, wie Bohrer, Fräser und dgl.

Die in verschiedenen Techniken eingesetzten Bauteile sind vor ihrem Einsatz zu entgraten, zu entspanen und zu reinigen, damit ihre Funktionsgeometrie, z. B. Schneidkanten, keine Grate mehr aufweisen und im Betrieb eine definierte genaue Funktion ermöglichen. Dabei ist nur auf den Einsatz von Bohrern bei der Bearbeitung von Schaltungsplatinen in der Elektrotechnik verwiesen. Dafür werden häufig manuelle Arbeitsvorgänge angewendet, die mit optischen Geräten kontrolliert und überwacht werden. Dies ist besonders bei der Entgratung, Entspanung und Reinigung von Bauteilen mit sehr kleinen Abmessungen ein schwieriges und kompliziertes Unterfangen.

Es ist Aufgabe der Erfindung, eine Vorrichtung zum Entgraten, Entspanen und Reinigen eines schlanken Bauteils, wie Bohrer, Fräser und dgl. zu entwickeln, mit der gerade Bauteile dieser Art einfach zu bearbeiten sind, ohne dass die Bauteile dabei diese vorgenannten Schäden nehmen und nach der Bearbeitung optimal eingesetzt werden können.

Die gestellte Aufgabe wird durch die Merkmale des Anspruches 1 gelöst.

Das Bauteil ist von einem Antrieb mit einer Umdrehung von > 5000 U/min in Drehbewegung versetzt und dabei ist mindestens ein Flüssigkeitsstrahl mit einem Druck von > 400 bar auf das Bauteil gerichtet.

Die schnelle Drehbewegung verhindert ein Abbrechen von sehr schlanken und dünnen Bauteilen, insbesondere wenn der oder die Flüssigkeitsstrahlen am freien Bauteilende angreifen. Durch die Drehbewegung erfährt das Bauteil eine wechselnde Biegebeanspruchung mit einem schnellen Lastanstieg und Lastabfall. Dadurch verringert sich die Bruchgefahr des Bauteils.

Die Entgratung, Entspanung und Reinigung des Bauteils wird nach einer Ausgestaltung dadurch verbessert, dass der Flüssigkeitsstrahl bei sich drehendem Bauteil parallel zur Längsmittelachse des Bauteils hin und her verstellbar ist.

Dies kann auch dadurch erreicht werden, dass der Antrieb mit dem sich drehendem Bauteil an dem feststehend angeordneten Flüssigkeitsstrahl in axialer Richtung des Bauteils hin und her verstellbar ist.

Auf diese Weise lassen sich auch Bauteile, wie Bohrer und Fräser mit großer Länge eindeutig entgraten, entspanen und reinigen.

Nach einer Ausgestaltung sind zwei Flüssigkeitsstrahlen verwendet, die diametral zur Längsmittelachse des Bauteils ausgerichtet sind. Dies ist besonders bei Bauteilen mit kleinem Durchmesser von Vorteil, da die von den Flüssigkeitsstrahlen auf das Bauteil ausgeübten Kräfte praktisch ausgeglichen werden.

Derselbe Zweck wird auch bei einer weiteren Ausgestaltung erreicht, die dadurch gekennzeichnet ist, dass mehr als zwei Flüssigkeitsstrahlen verwendet sind, die mit gleichem Winkel verteilt um das Bauteil herum angeordnet und auf die Längsmittelachse des Bauteils ausgerichtet sind.

Die Flüssigkeitsstrahlen können in einem stumpfen oder spitzen Winkel zur Längsmittelachse des Bauteils gerichtet sein, um auch nicht parallel zur Längsmittelachse des Bauteils verlaufende Schneidkanten des Bauteils sauber entgraten, entspanen und reinigen zu können.

Dabei kann es von Vorteil sein, wenn die Flüssigkeitsstrahlen in unterschiedlich stumpfen und/oder spitzen Winkeln zur Längsmittelachse des sich drehenden Bauteils ausgerichtet sind. Dabei lassen sich auch in Vorwärtsrichtung oder in Rückwärtsrichtung des Bauteils gebildete Hinterschnitte im Bereich der Schneidkanten sauber entgraten, entspanen und reinigen.

Der Winkel des oder der Flüssigkeitsstrahlen kann sich während der Entgratung, Entspanung und Reinigung zur Längsmittelachse des Bauteils ändern, um diese Arbeit noch zu verbessern.

Bei zwei diametral angeordneten Flüssigkeitsstrahlen und mehreren gleichmäßig um das Bauteil angeordneten Flüssigkeitsstrahlen kann zudem vorgesehen sein, dass die Flüssigkeitsstrahlen um einen Betrag (e) verstellt sind und das Bauteil außerhalb der Längsmittelachse beaufschlagen, so dass die Drehbewegung des Werkzeugs unterstützt ist.

Um ein Brechen eines Bauteils mit kleinem Durchmesser zu vermeiden, ist vorgesehen, dass die Vorrichtung vorzugsweise bei einem Bauteil mit einem Durchmesser von < 3 mm einsetzbar ist.

Die Erfindung wird anhand von in den Zeichnungen dargestellten Ausführungsbeispielen näher erläutert. Es zeigen:
- Fig. 1: ein erstes Ausführungsbeispiel der Vorrichtung mit unterschiedlich ausgerichteten Flüssigkeitsstrahlen,
- Fig. 2: eine diametrale Ausrichtung von zwei Flüssigkeitsstrahlen,
- Fig. 3: die Anordnung der um einen Betrag e versetzten Flüssigkeitsstrahlen um die Drehbewegung des Werkzeugs zu unterstützen und
- Fig. 4: ein Ausführungsbeispiel mit drei um 120° um die Längsmittelachse des Bauteils angeordneten Flüssigkeitsstrahlen.

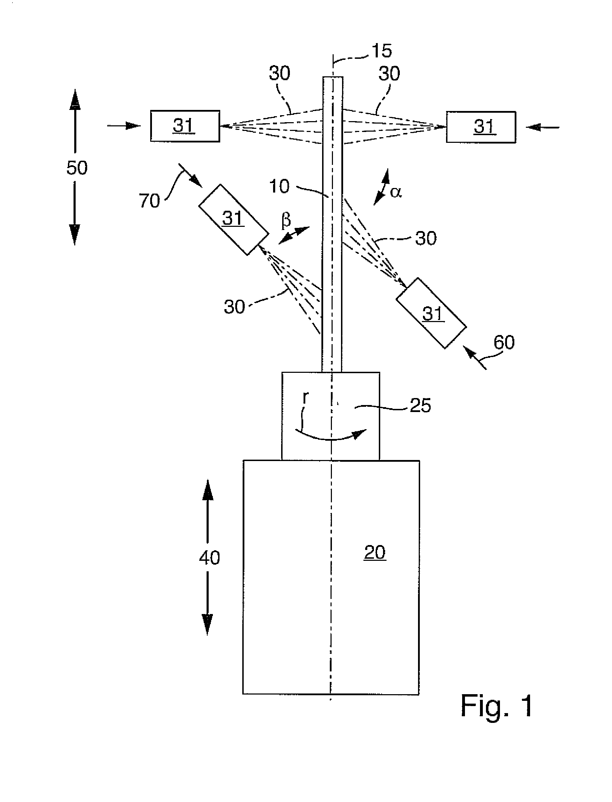

Die Fig. 1 zeigt schematisch eine Vorrichtung zum Entgraten, Entspanen und Reinigen eines Bauteils 10, das als Bohrer, Fräser oder dgl. ausgebildet ist und vorzugsweise einen kleinen Durchmesser aufweist. Dabei ist das Bauteil 10 von einem Antrieb 20 in Form eines Elektromotors in Drehbewegungen versetzt. Die Drehzahl ist mit > 5000 U/min gewählt. Dabei dreht der Antrieb 20 das in dem Spannkopf 25 eingespannte Bauteil 10 um seine Längsmittelachse 15.

Das sich drehende Bauteil 10 ist mit mindestens einem Flüssigkeitsstrahl 30 beaufschlagt, der mit einem Druck > 400 bar (vorzugsweise aus einer Hochdruckdüse 31) arbeitet. Ist der Flüssigkeitsstrahl 30 feststehend angeordnet, dann kann der Antrieb 20 parallel zur Längsmittelachse 15 des Bauteils 10 verstellt werden, um mit dem Flüssigkeitsstrahl 30 auch längere Bauteile 10 bearbeiten zu können, wie der Pfeil 40 andeutet.

Bei feststehend angeordnetem Antrieb 20 kann auch der Flüssigkeitsstrahl 30 parallel zur Längsmittelachse 15 am Werkstück 10 hin und her verstellt werden, wie der Pfeil 50 zeigt.

Dabei können die Flüssigkeitsstrahlen 30 auch unter einem stumpfen Winkel α (siehe Pfeil 60) oder unter einem spitzen Winkel β (siehe Pfeil 70) zur Längsmittelachse 15 des Bauteils 10 ausgerichtet sein. Es ist jedoch auch möglich, unterschiedlich stumpfe und/oder spitze Winkel der Flüssigkeitsstrahlen 30 einzustellen, um unregelmäßig verlaufende Schneidkanten des Bauteils 10 zu bearbeiten.

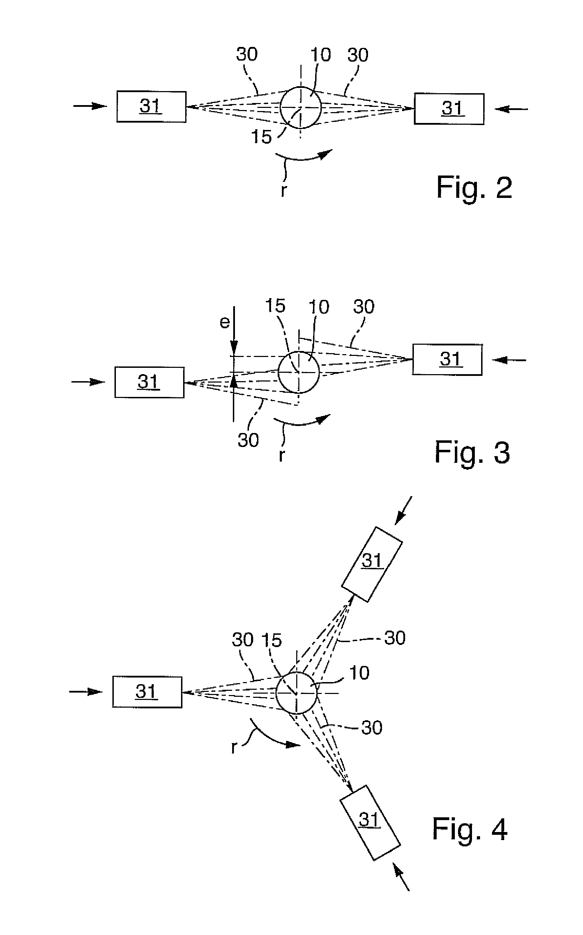

Gemäß der Erfindung ist es auch möglich, mehr als einen Flüssigkeitsstrahl 30 zu verwenden. So kann eine Ausgestaltung der Vorrichtung zwei Flüssigkeitsstrahlen 30 verwenden, die diagonal zur Längsmittelachse 10 angeordnet sind, wie Fig. 2 zeigt. Dabei lassen sich die von den Flüssigkeitsstrahlen 30 auf das Bauteil 10 ausgeübten Kräfte praktisch ausgleichen. Damit lässt sich ein Brechen des mit kleinem Durchmesser versehenen Bauteils 10 praktisch vermeiden.

Bei zwei und mehr Flüssigkeitsstrahlen 30 können die auf das Bauteil 10 gerichteten Flüssigkeitsstrahlen 30 um einen Betrag e in Drehrichtung r des Bauteils 10 verstellt werden, so dass die auf das Bauteil 10 auftreffenden Flüssigkeitsstrahlen 30 die Drehbewegung r des Werkzeugs 10 unterstützen, wie Fig. 3 zeigt.

Mehr als zwei Flüssigkeitsstrahlen 30 lassen sich in gleichen Winkeln um die Längsmittelachse 15 des Bauteils 10 herum anordnen und auf die Längsmittelachse 15 ausrichten, wie Fig. 4 zeigt. Dabei können die Flüssigkeitsstrahlen 30 gleich oder unterschiedlich zur Längsmittelachse 15 des Bauteils 10 ausgerichtet sein und sich während des Betriebes verändern.

Die Vorrichtung ist besonders vorteilhaft bei Bauteilen mit einem Durchmesser < 3 mm einsetzbar. Damit kann ein Brechen des Bauteils bei Bearbeiten sicher vermieden werden.

## Patentansprüche

1. Vorrichtung zum Entgraten, Entspanen und Reinigen eines schlanken Bauteils, wie Bohrer, Fräser und dgl.,
**dadurch gekennzeichnet,**
**dass** das Bauteil (10) von einem Antrieb (20) mit einer Umdrehung von > 5000 U/min in Drehbewegungen versetzt ist und
**dass** dabei auf das Bauteil (10) mindestens ein Flüssigkeitsstrahl (30) mit einem Druck von > 400 bar gerichtet ist (Fig. 1).

2. Vorrichtung nach Anspruch 1,
**dadurch gekennzeichnet,**
**dass** der Flüssigkeitsstrahl (30) bei sich drehendem Bauteil (10) parallel zur Längsmittelachse (15) des Bauteils (10) hin und her verstellbar (Pfeil 50) ist.

3. Vorrichtung nach Anspruch 1,
**dadurch gekennzeichnet,**
**dass** der Antrieb (10) mit dem sich drehenden Bauteil (10) an dem feststehenden Flüssigkeitsstrahl (30) in axialer Richtung des Bauteils (10) hin und her verstellbar ist (Pfeil 40).

4. Vorrichtung nach Anspruch 1 bis 3,
**dadurch gekennzeichnet,**
**dass** zwei Flüssigkeitsstrahlen (30) verwendet sind, die diametral zur Längsmittelachse (15) des Bauteils (10) ausgerichtet sind (Fig. 2).

5. Vorrichtung nach Anspruch 1 bis 3,
**dadurch gekennzeichnet,**
**dass** mehr als zwei Flüssigkeitsstrahlen (30) verwendet sind, die in gleichen Winkeln um das Bauteil (10) herum angeordnet und alle auf die Längsmittelachse (15) des Bauteils (10) ausgerichtet sind (Fig. 4).

6. Vorrichtung nach Anspruch 1 bis 5,
**dadurch gekennzeichnet,**
**dass** die Flüssigkeitsstrahlen (30) in einem stumpfen Winkel α (Pfeil 60) oder einem spitzen Winkel β (Pfeil 70) zur Längsmittelachse (15) des Bauteils (10) ausgerichtet sind.

7. Vorrichtung nach Anspruch 6,
**dadurch gekennzeichnet,**
**dass** die Flüssigkeitsstrahlen (30) in unterschiedlich stumpfen und/oder spitzen Winkeln zur Längsmittelachse (15) des sich drehenden Bauteils (10) ausgerichtet sind.

8. Vorrichtung nach Anspruch 1 bis 8,
**dadurch gekennzeichnet,**
**dass** sich die Winkel der Flüssigkeitsstrahlen (30) während der Bearbeitung des Bauteils (10) verändern.

9. Vorrichtung nach Anspruch 4 und 5,
**dadurch gekennzeichnet,**
**dass** die Flüssigkeitsstrahlen (30) um einen Betrag (e) verstellt sind und das Bauteil (10) außerhalb der Mittellängsachse (15) beaufschlagen, so dass die Drehbewegung (r) des Bauteils (10) unterstützt ist (Fig. 3).

10. Vorrichtung nach Anspruch 1 bis 9,
**dadurch gekennzeichnet,**
**dass** sie vorzugsweise bei der Bearbeitung eines Bauteils (10) mit einem Durchmesser < 3mm einsetzbar ist.
